Europäisches Patentamt

European Patent Office

Office européen des brevets

(11) Veröffentlichungsnummer: **0 309 436**
**A2**

## EUROPÄISCHE PATENTANMELDUNG

(21) Anmeldenummer: **88890171.7**

(22) Anmeldetag: **01.07.88**

(51) Int. Cl.⁴: **A 61 C 19/00**

(30) Priorität: **07.08.87 AT 2000/87**

(43) Veröffentlichungstag der Anmeldung:
**29.03.89 Patentblatt 89/13**

(84) Benannte Vertragsstaaten:
**CH DE ES FR GB IT LI SE**

(71) Anmelder: **ÖGUSSA Österreichische Gold- und Silber-Scheideanstalt Scheid und Roessler Gesellschaft m.b.H. & Co. KG.**
**Gumpendorferstrasse 85**
**A-1060 Wien (AT)**

(72) Erfinder: **Knetsch, Wilfried**
**Hauptstrasse 88 Haus 4**
**A-1140 Wien (AT)**

(74) Vertreter: **Collin, Hans, Dipl.-Ing. Dr. et al**
**Patentanwälte Dipl.-Ing. Dr. Hans Collin Dipl.-Ing. Erwin Buresch Dipl.-Ing. Dr. Helmut Wildhack Dipl.-Ing. Armin Häupl Mariahilfer Strasse 50**
**A-1070 Wien (AT)**

Die Bezeichnung der Erfindung wurde geändert (Richtlinien für die Prüfung im EPA, A-III, 7.3).

(54) **Handgerät zum Reinigen und/oder Desinfizieren und/oder Schmieren von zahnärztlichen Handstücken.**

㊼ Gegenstand der Erfindung ist ein Handgerät zur Pflege dentaler Instrumente, welches an seinem Eingang (1) an eine Druckgasquelle anschließbar ist und welches an seinem Ausgang (3) mit der Einlaßhülse des zu pflegenden dentalen Instruments verbindbar ist, welches Handgerät mit mindestens einem Behälter (6,7) zur Aufnahme des Pflegemittels versehen ist, der mit der vom Eingang (1) zum Ausgang (3) des Handgerätes führenden Druckgasleitung (2a) verbunden ist. Es besteht die Aufgabe, ein problemloses Eindosieren auch hochviskoser Pflegemittel und die Abgabe unterschiedlicher Mengen an Pflegemittel zu ermöglichen. Diese Aufgabe wird dadurch gelöst, daß dem Eingang (1) des Handgerätes ein Überdruckventil (2) nachgeschaltet ist, von dem eine Druckgasleitung (2a) zum Ausgang (3) des Handgerätes führt, daß zur Förderung des Pflegemittels mindestens eine Pumpe (4,5) vorgesehen ist, deren Ansaugleitung (4b,5b) mit dem mindestens einen Behälter (6,7) zur Aufnahme des Pflegemittels verbunden ist und deren Druckleitung (4b',5b') mit der zum Ausgang (3) des Handstückes führenden Druckgasleitung (2a) an einer Stelle (8) nach dem Überdruckventil (2) und vor dem Ausgang (3) des Handgerätes verbunden ist.

_Fig. 1_

EP 0 309 436 A2

## Beschreibung

### Handgerät zum Reinigen und/oder Desinfizieren und/oder Schmieren von dentalen Hand- oder Winkelstücken bzw. Turbinenwinkelstücken od.dgl.

Die Erfindung bezieht sich auf ein Handgerät zum Reinigen und/oder Desinfizieren und/oder Schmieren von dentalen Hand- oder Winkelstücken bzw. Turbinenwinkelstücken od.dgl., welches an seinem Eingang an eine an- und abschaltbare Druckgasvorzugsweise Druckluftquelle, insbesondere an die in jeder zahnärztlichen Praxis vorhandene Dentaleinheit, anschließbar ist und welches an seinem Ausgang mit der Einlaßhülse des zu reinigenden und/oder zu desinfizierenden und/oder zu schmierenden dentalen Hand- bzw. Winkelstückes bzw. Turbinenhandstückes od.dgl. verbindbar ist, welches Handgerät mit mindestens einem Behälter zur Aufnahme des Reinigungs- und/oder Desinfektions- und/oder Schmiermittels versehen ist, der mit der vom Eingang zum Ausgang des Handgerätes führenden Druckgasleitung verbunden ist. Ein solches Handgerät ist aus der US-PS 3 811 408 bekannt. Dieses bekannte Handgerät erfordert jedoch eine umständliche Handhabung und es ergeben sich Schwierigkeiten beim Eindosieren der Reinigungs- und/oder Desinfektions- und/oder Schmiermittel insbesondere auch dahingehend, daß keine Mittel mit höherer Viskosität verwendet werden können. Es wären aber gerade Schmiermittel mit hoher Viskosität in der Anwendung besonders wertvoll, da diese über längere Zeiträume im dentalen Hand- oder Winkelstück bzw. Turbinenwinkelstück od.dgl., die im folgenden kurz als dentale Instrumente bezeichnet werden, verbleiben und eine Langzeitschmierung sicherstellen. Dieser Umstand ist angesichts der sehr hohen Drehzahlen, die bei solchen dentalen Instrumenten auftreten, besonders wesentlich (so tritt beispielsweise bei einem Winkelstück mit eingebauter Übersetzung infolge der hohen Drehzahlen im Betrieb eine Erwärmung auf, so daß an die Schmierung eines solchen Winkelstückes besonders hohe Anforderungen zu stellen sind).

Außerdem sind mit dem bekannten Handgerät jeweils nur ganz geringe Mengen an Pflegemittel eindosierbar; diese geringen Mengen mögen für die Schmierung des dentalen Instrumentes ausreichend sein, für eine ordnungsgemäße Reinigung und Desinfizierung sind jedoch größere Mengen an Pflegemittel erforderlich.

Ziel der Erfindung ist es, diese Nachteile des bekannten Handgerätes zu beseitigen. Dies wird bei dem eingangs näher bezeichneten Handgerät erfindungsgemäß dadurch erreicht, daß dem Eingang des Handgerätes ein Überdruckventil nachgeschaltet ist, von dem eine Druckgasleitung zum Ausgang des Handgerätes führt, daß zur Förderung des Reinigungs- und/oder Desinfektions- und/oder Schmiermittels mindestens eine vorzugsweise handbetätigte Pumpe vorgesehen ist, deren Ansaugleitung mit dem mindestens einen Behälter zur Aufnahme des Reinigungs- und/oder Desinfektions- und/oder Schmiermittels verbunden ist und deren Druckleitung mit der zum Ausgang des Handgerätes führenden Druckgasleitung an einer Stelle nach dem Überdruckventil und vor dem Ausgang des Handgerätes verbunden ist. Dabei ist es besonders vorteilhaft, wenn gemäß einer weiteren Ausgestaltung der Erfindung als Pumpe eine Kolbenpumpe mit zwei, jeweils in der Ansaug- und der Druckleitung angeordneten Rückschlagventilen vorgesehen ist.

Es ist weiters vorteilhaft, wenn die Verbindungsstelle der Druckleitung der Pumpe mit der zum Ausgang des Handgerätes führenden Druckgasleitung unmittelbar vor dem Ausgang des Handgerätes vorgesehen ist, wobei die Einmündung der Druckleitung in die zum Ausgang des Handgerätes führende Druckgasleitung unter einem Winkel von etwa 15° zur Achse dieser Druckgasleitung vorgesehen ist. Zweckmäßigerweise ist am Eingang des Handgerätes der Anschlußschlauch, insbesondere der Turbinenschlauch, der Dentaleinheit mittels einer an sich bekannten Schnelldrehkupplung anschließbar.

Zur Abdichtung des zu pflegenden dentalen Instruments gegenüber dem Handgerät kann gemäß einer Weiterbildung der Erfindung vorgesehen sein, daß am Ausgang des Handgerätes ein zylindrischer, aus einem elastischen und gegenüber dem Reinigungs- und/oder Desinfektions- und/oder Schmiermittel beständigen Material, vorzugsweise aus Silikongummi bzw. Silikonkunststoff, bestehender Anschlußstutzen vorgesehen ist, auf den das zu reinigende und/oder zu desinfizierende und/oder zu schmierende Hand- oder Winkelstück bzw. Turbinenwinkelstück aufschieb- bzw. aufsteckbar ist. Dabei kann erforderlichenfalls der Anschlußstutzen an seinem vorderen Ende nur teilweise offen sein, um die im Hand- oder Winkelstück bzw. Turbinenwinkelstück vorgesehenen Kanäle zur Weiterleitung eines Wasser-Luft-Gemisches abzudecken. Durch diese Maßnahmen wird erreicht, daß durch den im Inneren des mit seinem hülsenartigen Anschlußende auf den elastischen Anschlußstutzen des Handgerätes aufsteckbaren dentalen Instruments entstehenden Rückstau des mit dem Pflegemittel beladenen Druckgases ein Anlegen der elastischen Außenwand des Anschlußstutzens an die Innenwand des hülsenartigen Anschlußendes und somit die erforderliche Abdichtung der Verbindung dentales Instrument - Anschlußstutzen des Handstückes erreicht wird.

Durch die Erfindung wird insbesondere die Verwendung hochviskoser Pflegemittel, vorzugsweise Schmiermittel, ermöglicht und eine sichere und problemlose Eindosierung auch größerer Mengen von Pflegemittel, insbesondere von Reinigungs- und Desinfektionsmittel, realisiert, wobei der Pflegevorgang unter Ausnutzung der in jeder zahnärztlichen Praxis vorhandenen Dentaleinheit rasch und problemlos durchfürbar ist. Es ergibt sich dadurch eine längere Lebensdauer der dentalen Instrumente.

Die Erfindung wird nun unter Bezugnahme auf die Zeichnungen, in denen ein Ausführungsbeispiel des erfindungsgemäßen Handgerätes dargestellt ist, näher beschrieben; in diesen zeigt Fig. 1 eine Aufrißdarstellung des erfindungsgemäßen Handgerätes teilweise im Schnitt, Fig. 2 eine Prinzipdarstellung der Funktionselemente des erfindungsgemäßen Handgerätes, Fig. 3 einen Längsschnitt durch das Überdruckventil, Fig. 4a einen Längsschnitt durch eine erste Ausführungsform des Anschlußstutzens am Ausgang des erfindungsgemäßen Handgerätes und Fig. 4b eine Vorderansicht dieses Anschlußstutzens, Fig. 5a eine zweite Ausführungsform eines solchen Anschlußstutzens im Längsschnitt und Fig. 5b in Vorderansicht, Fig. 6a einen Längsschnitt durch die Eindosierungs- bzw. Misch-Kammer des erfindungsgemäßen Handgerätes, Fig. 6b eine Hinteransicht dieser Kammer und Fig. 6c eine Draufsicht auf diese Kammer.

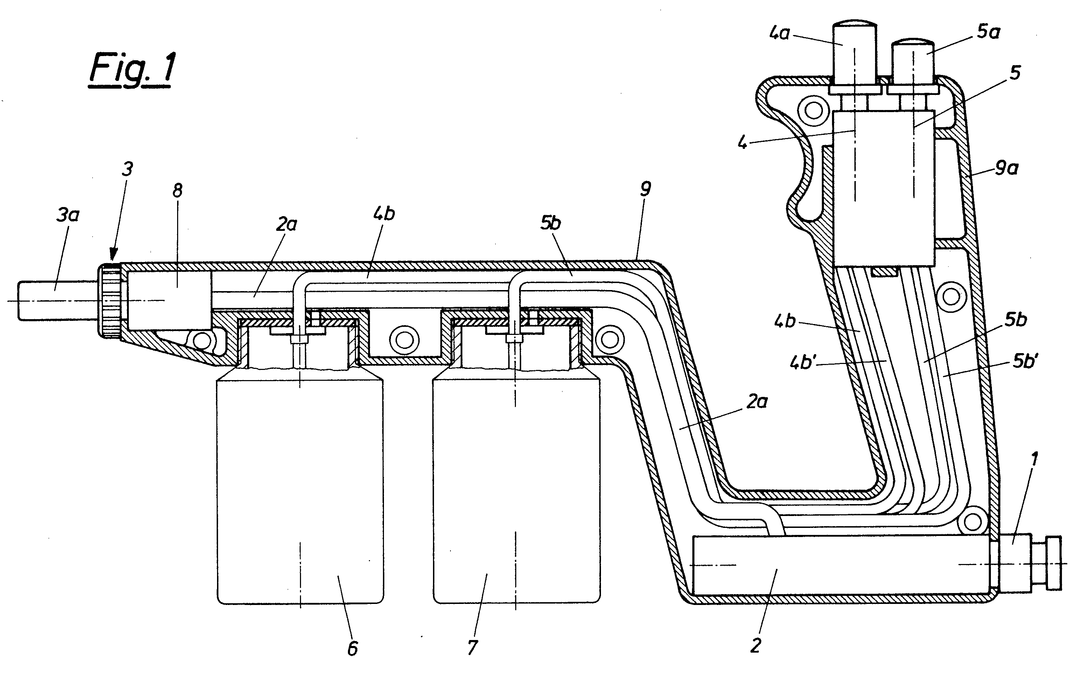

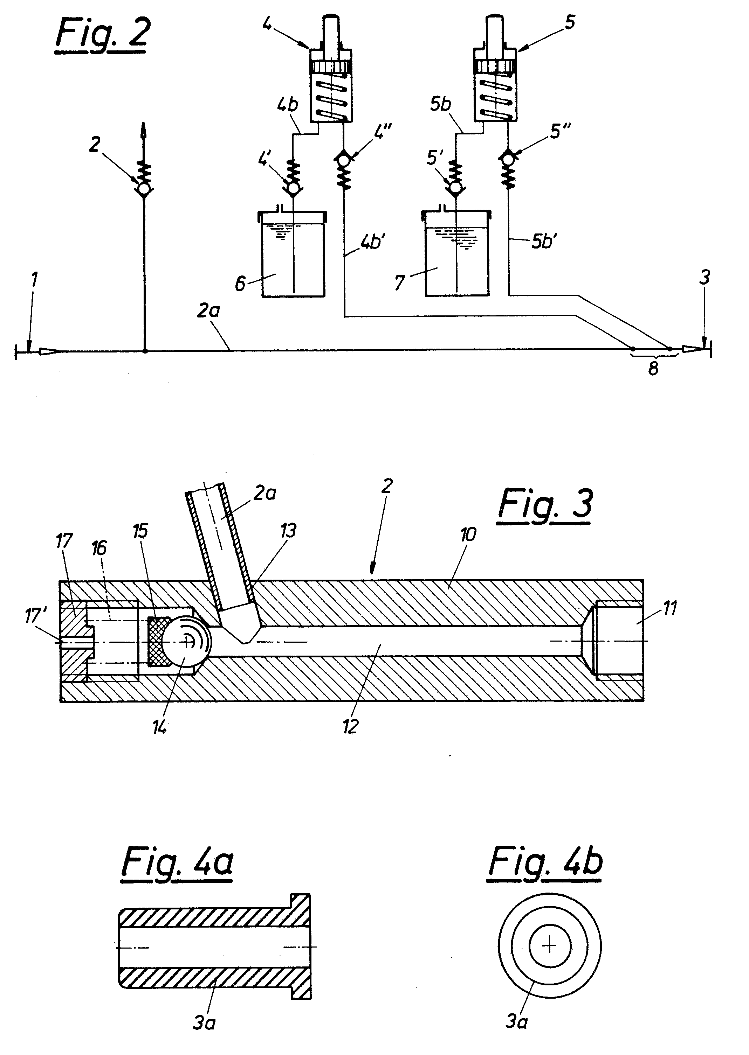

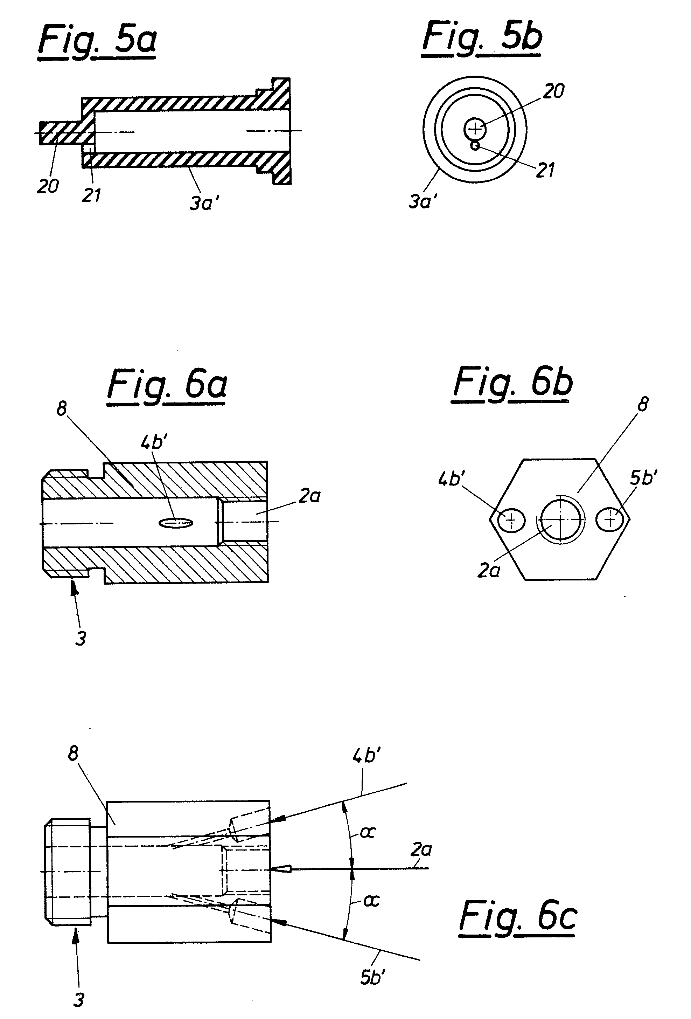

In Fig. 1 ist das erfindungsgemäße Handgerät in seiner Gesamtheit dargestellt. Am Eingang 1 des Handgerätes wird eine Druckgasquelle, vorzugsweise die in jeder zahnärztlichen Praxis vorhandene Dentaleinheit angeschlossen. Es wird dabei an den Turbinenschlauch, anstelle des Turbinenwinkelstücks, mittels der vorhandenen Schnelldrehkupplung angesteckt oder -falls keine Kupplung vorhanden ist - an das Gewinde des Schlauches geschraubt. Bei Betätigung des Fußanlassers der Dentaleinheit, d.h. beim Einschalten des jetzt nicht vorhandenen Turbinenwinkelstücks, wird Luft mit dem für die Turbine eingestellten Fließdruck von üblicherweise etwa 2,2 bar in das Handgerät geleitet. Ein Überdruckventil 2 vermindert diesen Druck auf etwa 1 bar, ohne die Schläuche der Dentaleinheit zu belasten. Die Druckluft wird nun weiter durch die Druckgasleitung 2a zum Ausgang 3 geleitet, wo mittels auswechselbarer und dichtender Adapter, z.B. den in Fig. 1 angedeuteten und in den Fig. 4a,b und 5a,b gezeigten elastischen Anschlußstutzen 3a bzw. 3a', nicht dargestellte Turbinenwinkelstücke sowie Hand-und Winkelstücke verschiedenster Art, im weiteren kurz als dentale Instrumente bezeichnet, aufgesteckt werden können.

Das in Fig. 1 dargestellte Handgerät ist mit zwei Vorratsbehältern 6,7 für Reinigungs-(Desinfektions-) und Schmiermittel versehen, aus denen mittels zweier handbetätigter (Druckknöpfe 4a,5a) Kolbenpumpen 4,5 diese Reinigungs- (Desinfektions-) und Schmiermittel, im weiteren kurz als Pflegemittel bezeichnet, über Ansaugleitungen 4b,5b angesaugt sind unter Druck unabhängig voneinander in die Druckgasleitung 2a eingespritzt werden können, so daß das Druckgas die Pflegemittel in das aufgesteckte dentale Instrument einbringt. Zu diesem Zweck geht von jeder Pumpe 4,5 eine Druckleitung 4',5' aus, die zusammen mit der Druckgasleitung 2a in einer in Stromrichtung vor dem Ausgang 3 aber hinter dem Überdruckventil 2 gelegenen Eindosierungs-bzw. Mischkammer 8 münden (vgl. auch Fig. 6a,b,c). Jeder Pumpe 4,5 sind zwei aus Fig. 2 ersichtliche Rückschlagventile 4',4" bzw. 5',5" zugeordnet, von denen die Rückschlagventile 4',5' jeweils in den zu den Behältern 6 und 7 führenden Ansaugleitungen 4b und 5b und die Rückschlagventile 4",5" jeweils in den zur Mischkammer 8 führenden Druckleitungen 4b' und 5b' angeordnet sind. Der Druck, mit dem die Eindosierung der Pflegemittel in der Mischkammer 8 erfolgt und der von den Pumpen 4,5 aufgebracht werden muß, ist höher als der Druck in der Druckleitung 2a aber niedriger als der am Eingang 1 des Handgerätes herrschende Druck und liegt beispielsweise bei etwa 1,2 bar.

Die aus dem Ausgang 3 des Handgerätes austretende, mit dem Pflegemittel beladene Durchluft durchdringt das auf den Anschlußstutzen 3a aufgesteckte, nicht dargestellte dentale Instrument und tritt an der Spitze des Instruments wieder aus. Wenn die Pumpen 4 und 5 nicht betätigt werden, der Fußanlasser der Dentaleinheit aber betätigt bleibt, können mit der unbeladenen Druckluft überschüssige Flüssigkeitsmengen aus dem dentalen Instrument ausgeblasen werden, so daß sie nicht in den Mund des Patienten oder in einen allenfalls vorhandenen elektrischen Antriebsmotor gelangen können.

Durch die Anzahl der Betätigungen der Kolbenpumpen 4,5 (vgl. Fig.2) mittels der Druckknöpfe 4a,5a (vgl. Fig.1) können die Mischungsverhältnisse der in den Behältern 6,7 enthaltenen Pflegemittel mit der Druckluft geregelt und den jeweiligen Erfordernissen angepaßt werden. Da die Pflegemittel durch Pumpen gefördert werden, ist jede Art und Viskosität der Pflegemittel möglich.

Alle Teile des Handgerätes sind in bzw. an einem abgewinkelten, länglichen Gehäuse 9 mit einem handgriffartigen Fortsatz 9a angeordnet.

Fig. 3 zeigt eine Ausführungsform des Überdruckventils 2, wobei an einem Ende des mit einer inneren Längsbohrung 12 versehenen Ventilkörpers 10 ein Anschlußgewinde 11 für die Turbinenschlauch-Schnelldrehkupplung vorgesehen ist. Bei 13 ist die zum Ausgang 3 des Handgerätes laufende Druckgasleitung 2a, die aus einem PVC-Schlauch bestehen kann, in den Ventilkörper 10 eingesetzt, vorzugsweise eingeklebt. Mit 14 ist eine die Längsbohrung 12 abschließende Ventilkugel bezeichnet, die unter Zwischenschaltung eines Schaumstoffkissens 15 zur Geräuschdämpfung von einer Druckfeder 16 beaufschlagt ist; an ihrem anderen Ende stützt sich die Druckfeder 16 auf einem den die Kugel 14 und die Druckfeder 16 aufnehmenden axialen Hohlraum im Ventilkörper 10 nach außen abschließenden Schraubdeckel 17 mit Entlüftungsbohrung 17' ab.

In den Fig. 4a,b und 5a,b sind zwei Beispiele für aus elastischem, gegenüber dem Pflegemittel beständigem Material, vorzugsweise Silikongummi bzw. Silikonkautschuk bestehende Anschlußstutzen 3a bzw. 3a' dargestellt. Der in den Fig. 4a und 4b gezeigte Anschlußstutzen 3a ist für Hand- und Winkelstücke aller Marken und Typen geeignet. Der in den Fig. 5a und 5b gezeigte Anschlußstutzen 3a' ist vor allem für W & H Turbinenwinkelstücke mit Rotoquick-Anschluß geeignet, wobei die Durchgangsöffnung vorne mit einem nasenartigen Abschluß 20 versehen ist, damit der Spraykanal des Bohrers bzw. Handstückes nicht mit dem Pflegemittel beaufschlagt wird; zum Austritt der pflegemittelbeladenen Druckluft ist in der Stirnwand eine kleine exzentrisch angebrachte Bohrung 21 vorgesehen. Die Abdichtung des Ausgangs 3 des Handgerätes gegenüber dem zu pflegenden dentalen Instrument wird dadurch erreicht, daß sich die elastischen Anschlußstutzen 3a,3a' unter Druck dehnen und sich dichtend an die Innenwand des aufgesteckten dentalen Instruments anlegen.

In den Fig. 6a,6b und 6c ist die Mischkammer 8 des Handgerätes im Detail dargestellt. So ist insbesondere aus Fig. 6c, die einen Grundriß in bezug auf Fig. 1 darstellt, ersichtlich, daß die Einmündung der Druckleitungen 4b' und 5b' der Pumpen 4,5 in die Mischkammer 8 jeweils unter einem spitzen Winkel α in bezug auf die in der Längsachse angeordnete Druckgasleitung 2a erfolgt, der etwa 15° beträgt. Dadurch wird eine optimale Beaufschlagung der Träger-Druckluft mit den Pflegemitteln erreicht. Infolge der ansonsten parallelen Anordnung der Leitungen 2a,4b' und 5b' im Handgerät ist auch in Fig. 1 lediglich die Leitung 2a dargestellt. Die Mischkammer 8 weist einen sechseckigen Außenumfang auf (Fig. 6b) und ist mit entsprechenden Anschlußgewinden versehen.

Das erfindungsgemäße Handgerät kann ohne weiteres auch mit drei Vorratsbehältern für Pflegemittel und drei Pumpen versehen sein.

Anstelle der Verwendung des erfindungsgemäßen Handgerätes zusammen mit einer Dentaleinheit ist auch eine auf demselben Prinzip aufgebaute größere Anlage für mehrere Instrumente mit automatischem Arbeitsablauf und eigener Luftversorgung möglich.

## Patentansprüche

1. Handgerät zum Reinigen und/oder Desinfizieren und/oder Schmieren von dentalen Hand- oder Winkelstücken bzw. Turbinenwinkelstükken od.dgl., welches an seinem Eingang an eine an- und abschaltbare Druckgas- vorzugsweise Druckluftquelle, insbesondere an die in jeder zahnärztlichen Praxis vorhandene Dentaleinheit, anschließbar ist und welches an seinem Ausgang mit der Einlaßhülse des zu reinigenden und/oder zu desinfizierenden und/oder zu schmierenden dentalen Hand- bzw. Winkelstükkes bzw. Turbinenhandstückes od.dgl. verbindbar ist, welches Handgerät mit mindestens einem Behälter zur Aufnahme des Reinigungs- und/oder Desinfektions- und/oder Schmiermittels versehen ist, der mit der vom Eingang zum Ausgang des Handgerätes führenden Druckgasleitung verbunden ist, dadurch gekennzeichnet, daß dem Eingang (1) des Handgerätes ein Überdruckventil (2) nachgeschaltet ist, von dem eine Druckgasleitung (2a) zum Ausgang (3) des Handgerätes führt, daß zur Förderung des Reinigungs- und/oder Desinfektions- und/oder Schmiermittels mindestens eine vorzugsweise handbetätigte Pumpe (4;5) vorgesehen ist, deren Ansaugleitung (4b;5b) mit dem mindestens einen Behälter (6;7) zur Aufnahme des Reinigungs- und/oder Desinfektions- und/oder Schmiermittels verbunden ist und deren Druckleitung (4b';5b') mit der zum Ausgang (3) des Handgerätes führenden Druckgasleitung (2a) an einer Stelle nach dem Überdruckventil (2) und vor dem Ausgang (3) des Handgerätes verbunden ist.

2. Handgerät nach Anspruch 1, dadurch gekennzeichnet, daß als Pumpe eine Kolbenpumpe (4;5) mit zwei, jeweils in der Ansaug- (4b;5b) und der Druckleitung (4b';5b') angeordneten Rückschlagventilen (4',4'';5',5'') vorgesehen ist.

3. Handgerät nach Anspruch 1 oder 2, dadurch gekennzeichnet, daß die Verbindungsstelle (8) der Druckleitung (4b';5b') der Pumpe (4;5) mit der zum Ausgang des Handgerätes führenden Druckgasleitung (2a) unmittelbar vor dem Ausgang (3) des Handgerätes vorgesehen ist, wobei die Einmündung der Druckleitung (4b';5b') in die zum Ausgang (3) des Handgerätes führende Druckgasleitung (2a) unter einem Winkel von etwa 15° zur Achse dieser Druckgasleitung (2a) vorgesehen ist.

4. Handgerät nach einem der Ansprüche 1 bis 3, dadurch gekennzeichnet, daß am Eingang (1) des Handgerätes der Anschlußschlauch, insbesondere der Turbinenschlauch, der Dentaleinheit mittels einer an sich bekannten Schnelldrehkupplung anschließbar ist.

5. Handgerät nach einem der Ansprüche 1 bis 4, dadurch gekennzeichnet, daß am Ausgang (3) des Handgerätes ein zylindrischer, aus einem elastischen und gegenüber dem Reinigungs- und/oder Desinfektions- und/oder Schmiermittel beständigen Material, vorzugsweise aus Silikongummi bzw. Silikonkunststoff, bestehender Anschlußstutzen (3a;3a') vorgesehen ist, auf den das zu reinigende und/oder zu desinfizierende und/oder zu schmierende Hand- oder Winkelstück bzw. Turbinenwinkelstück aufschieb- bzw. aufsteckbar ist.

6. Handgerät nach Anspruch 5, dadurch gekennzeichnet, daß der Anschlußstutzen (3a') an seinem vorderen Ende nur teilweise offen ist, um die im Hand- oder Winkelstück bzw. Turbinenwinkelstück vorgesehenen Kanäle zur Weiterleitung eines Wasser-Luft-Gemisches abzudecken.

Fig. 1

EP 0 309 436 A2

Fig. 2

Fig. 3

Fig. 4a

Fig. 4b

## _Fig. 5a_

## _Fig. 5b_

## _Fig. 6a_

## _Fig. 6b_

## _Fig. 6c_